# EUROPEAN PATENT SPECIFICATION

(11) **EP 2 520 592 B1**
(45) Date of publication and mention of the grant of the patent: **01.04.2015**
(21) Application number: 10841237.0
(22) Date of filing: 28.12.2010
(51) Int. Cl.: C08F 4/654, C08F 10/00

(54) **PRODUCTION METHOD FOR A CATALYST FOR POLYOLEFIN POLYMERISATION, A CATALYST OBTAINED BY MEANS OF THE SAME, AND A PRODUCTION METHOD FOR POLYOLEFINS BY USING THE SAME**
VERFAHREN ZUR HERSTELLUNG EINES KATALYSATORS FÜR POLYOLEFINPOLYMERISATION, AUF DIESE WEISE GEWONNENER KATALYSATOR UND VERFAHREN ZUR HERSTELLUNG VON POLYOLEFINEN DAMIT
PROCÉDÉ DE PRODUCTION D'UN CATALYSEUR DE POLYMÉRISATION POLYOLÉFINIQUE, CATALYSEUR OBTENU ET PROCÉDÉ DE PRODUCTION DE POLYOLÉFINES À L'AIDE DE CE PROCÉDÉ

(30) Priority: 28.12.2009 KR 20090132240
(43) Date of publication of application: 07.11.2012
(73) Proprietor: Honam Petrochemical Corporation, Seoul 156-711 (KR)
(72) Inventor: CHOI, Young Heon, Daejeon 305-720 (KR); LIM, Seong Soo, Daejeon 305-720 (KR); KIM, Young Kook, Daejeon 305-720 (KR)
(74) Representative: Eisenführ Speiser
(86) International application number: PCT/KR2010/009420
(87) International publication number: WO 2011/081405

(56) References cited:
- EP-A1- 0 926 165
- EP-A2- 2 301 664
- WO-A1-2005/040231
- KR-A- 20010 033 585
- KR-A- 20100 007 076
- US-A- 5 028 671

## Description

### CROSS-REFERENCE TO RELATED APPLICATIONS

This application is based on and claims priority from Korean Patent Application No. 10-2009-0132240, filed on 12 28, 2009, with the Korean Intellectual Property Office, the present disclosure of which is incorporated herein in its entirety by reference.

### TECHNICAL FIELD

The present disclosure relates to a method for preparing a catalyst used to polymerize polyolefin, and particularly, to a method for preparing a Ziegler-Natta type catalyst for polymerization of polyolefin.

### BACKGROUND

Catalysts for polymerization of polyolefin may be classified into Ziegler-Natta type catalysts, chromium-based catalysts and metallocene catalysts according to the kind of central metal. These catalysts are different from each other in catalyst activity, molecular weight distribution characteristics of a polymer and reaction characteristics for comonomers and thus are selectively used according to each preparation process and applied product.

Meanwhile, among the catalysts, Ziegler-Natta type catalysts are most commonly used, and most of the catalysts are prepared as magnesium chloride-supported types. These magnesium chloride-supported Ziegler-Natta type catalysts are generally composed of solid catalyst components including magnesium, titanium, halogen and an electron-donating organic compound and applied to various commercial processes such as slurry polymerization, bulk polymerization, gas phase polymerization and the like. Thus, not only basic physical properties such as high activity and stereo regularity, but also appropriate shape and size of particles, uniform particle size distribution, high bulk density and the like need to be satisfied.

In order to prepare a catalyst which satisfies the above-described conditions, a support used for preparation of the catalyst has been prepared by using a recrystallization and reprecipitation method, a spray drying method, a method using chemical reactions and the like in the related art. In this case, the recrystallization/reprecipitation method and the spray drying method are most commonly used in order to prepare a magnesium chloride support, but catalysts produced by using supports prepared by these methods have a relatively low activity, and thus catalyst residues are present in quite large amounts in polymeric products. Thus, there is a limitation in that the catalysts are not somewhat suitable to develop a currently emerging future-oriented eco-friendly material.

The catalyst prepared by using, as a support, dialkoxy magnesium obtained by reacting magnesium with alcohol as one of the methods using chemical reactions is advantageous in that the catalyst has high activity and stereo regularity. However, it is disadvantageous that the catalyst has a somewhat smaller bulk density of a polymeric product than a catalyst using a magnesium chloride support, and thus the process stability and the productivity which is considered the most important during commercial production is low.

In this regard, US Pat. No. 4,816,433 suggests a method for preparing a solid catalyst for polymerization of olefin by using a dialkoxy magnesium single support and reacting the single support with titanium tetrachloride and an internal electron donor. However, this technology is disadvantageous in that the polymerization product has a low bulk density of 0.45 g/ml or less, and thus the production weight per reactor of a unit volume is low in commercial processes, leading to decrease in productivity.

US Pat. No. 4,952,649 suggests a method for preparing a solid catalyst for polymerization of olefin by subjecting a solution obtained by reacting magnesium halide with alcohol to a recrystallization reaction with titanium tetrachloride and an internal electron donor. However, this technology is disadvantageous in that when polypropylene is polymerized, the activity is 30 kg-PP/g-cat or less, and catalyst residues of relatively large amounts are left in polymerization products, and thus the catalyst is not suitable as a future eco-friendly material.

US Pat. No. 5,028,671 suggests a method for preparing a spherical solid catalyst for polymerization of olefin, obtained by reacting a spherical magnesium halide support which includes alcohol and is prepared by a spray drying method, titanium tetrachloride and an internal electron donor. However, this technology is also disadvantageous in that when polypropylene is polymerized, the activity is 30 kg-PP/g-cat or less and catalyst residues of relatively large amounts are left in polymerization products, and thus the catalyst is not suitable as a future eco-friendly material.

### SUMMARY

The present disclosure has been made in an effort to provide a method for preparing a catalyst for polymerization of polyolefin, which may exhibit high activity and a catalyst for polymerization of polyolefin prepared by the same.

The present disclosure has also been made in an effort to provide a method for preparing polyolefin having high bulk density by using the catalyst for polymerization of polyolefin.

An exemplary embodiment of the present disclosure provides a method for preparing a catalyst for polymerization of polyolefin, including: a) dissolving a magnesium halide compound in a first alcohol and a first hydrocarbon and then adding an alkoxysilane compound thereto to prepare a magnesium halide precursor solution; b) reacting a second alcohol with metal magnesium in the presence of a halogen compound to prepare a dialkoxy magnesium support; and c) reacting the magnesium halide precursor solution and the dialkoxy magnesium support with titanium tetrachloride and an internal electron donor in the presence of a second hydrocarbon.

The present disclosure may provide a catalyst for polymerization of polyolefin prepared by the preparation method.

The present disclosure may provide a method for preparing polyolefin by using the prepared catalyst for polymerization of polyolefin.

### DETAILED DESCRIPTION

Hereinafter, the present disclosure will be described in detail.

### <Preparation method of catalyst for polymerization of polyolefin and catalyst prepared by the same>

### 1. Preparation of magnesium halide precursor solution

A magnesium halide precursor solution according to the present disclosure may be obtained by introducing a first alcohol and a predetermined amount of a first hydrocarbon into magnesium halide, stirring at a high temperature to homogeneously dissolve the mixture, and then adding an alkoxysilane compound thereto.

In this case, available magnesium halide is not particularly limited, but is a compound which does not have reducibility, and may be selected from the group consisting of magnesium chloride, magnesium fluoride, magnesium bromide, magnesium iodide, phenoxy magnesium chloride, isoproxy magnesium chloride and butoxy magnesium chloride. Among them, magnesium chloride which is structurally and coordinatively stable with titanium tetrachloride which is a main active metal is preferably used. A catalyst using the magnesium chloride is readily used to prepare a polymer (polyolefin) having high bulk density.

Available first alcohol is not particularly limited, but may be one or two or more selected from the group consisting of aliphatic alcohols, such as methanol, ethanol, n-propanol, isopropanol, n-butanol, isobutanol, n-pentanol, isopentanol, neopentanol, cyclopentanol, n-hexanol, n-heptanol, n-octanol, decanol, dodecanol, 2-methylpentanol, 2-ethylbutanol, 2-ethylhexanol and the like; aliphatic alcohols represented by the formula R₁OH (in this case, R₁ is an aliphatic hydrocarbon having from 1 to 12 carbon atoms (specifically, an alkyl group)), such as cyclohexanol, methylcyclohexanol and the like; and aromatic alcohols represented by the formula R₂OH (in this case, R₂ is an aromatic hydrocarbon having from 6 to 12 carbon atoms), such as benzyl alcohol, methylbenzyl alcohol, isopropyl benzyl alcohol, α-methylbenzyl alcohol and the like. In this case, one or two or more first alcohols selected from the aliphatic alcohols are preferably used either alone or in combination thereof, and among the aliphatic alcohols, 2-ethylhexanol is suitably used. Here, when two or more first alcohols are mixed and used, the mixture ratio is not particularly limited, but it is preferred that the first alcohol totally used is used in an amount of from 1 to 6 moles and specifically from 2 to 4 moles, based on 1 mole of magnesium halide.

Meanwhile, in reacting magnesium halide with the first alcohol in the presence of the first hydrocarbon to prepare a homogeneous precursor solution, available first hydrocarbon is not particularly limited, but an aliphatic hydrocarbon having from 6 to 20 carbon atoms is preferred. Here, non-limiting examples of the aliphatic hydrocarbon having from 6 to 20 carbon atoms include hexane, heptane, octane, decane, dodecane, tetradecane, mineral oil, cyclohexane, cyclooctane, methylcyclopentane, methylcyclohexane and the like.

In this case, it is preferred that the one or two or more first hydrocarbons selected from the aliphatic hydrocarbons are used either alone or in combination thereof. When two or more first hydrocarbons are selected from the aliphatic hydrocarbons and mixed, the mixture ratio thereof is not particularly limited. Meanwhile, the carbon number of the aliphatic hydrocarbon is preferably from 6 to 20, and among them, the carbon number is suitably from 8 to 15. When the carbon number of the aliphatic hydrocarbon is less than the range, the boiling point of the first hydrocarbon solvent is low, which limits the reaction temperature. When the carbon number is more than the range, the viscosity and melting point of the first hydrocarbon solvent are so high that it is difficult to use the first hydrocarbon solvent, which is not preferred.

In preparing the magnesium halide precursor solution, the magnesium halide, the first alcohol and the first hydrocarbon are preferably used in amounts of from 1 to 10 parts by weight and from 1 to 20 parts by weight, respectively, based on 1 part by weight of magnesium halide. When the first alcohol is used in an amount less than the range, magnesium halide is not dissolved well. When the first alcohol is used in an amount more than the range, the recrystallization reaction may not occur well during synthesis of the catalyst. When the first hydrocarbon is used in an amount less than the range, magnesium halide dissolved in the first alcohol is not dispersed well, and thus the two-component support is not formed during synthesis of the catalyst, but a magnesium halide single support is formed. When the first hydrocarbon is used in an amount more than the range, the volume of the magnesium halide precursor solution may be increased, thereby affecting the concentrations of all reactants during synthesis of the catalyst.

Magnesium halide is reacted with the first alcohol at a reaction temperature (dissolution temperature) of preferably from 70 to 150°C in the presence of the first hydrocarbon, and specifically, the temperature is suitable at 100°C or more. It is preferred that the upper limit of the reaction temperature is not higher than the boiling points of the first hydrocarbon and the first alcohol used. In order to disperse the solution prepared, it is preferred that a stirrer is installed in a reactor to ensure sufficient stirring.

Meanwhile, the first alcohol and the first hydrocarbon are introduced into magnesium halide to homogeneously dissolve the mixture, and then an alkoxysilane compound is added thereto to finally prepare a magnesium halide precursor solution. In this case, an available alkoxy silane compound is not particularly limited, but is preferably a compound represented by the following Formula 1.

[Formula 1] Si(ORₐ)ₙR_{b(4-n)}

(In Formula 1, Rₐ and R_{b} are an alkyl group having from 1 to 5 carbon atoms, and n is a natural number of from 1 to 4.)

Here, specific examples of the compound represented by Formula 1 include trimethoxyethylsilane, trimethoxypropylsilane, dimethoxydimethylsilane, dimethoxydiethylsilane, dimethoxydipropylsilane, tetramethoxysilane, tetraethoxysilane, tetrapropoxysilane, triethoxymethylsilane, triethoxyethylsilane, triethoxypropylsilane, diethoxydimethylsilane, diethoxydiethylsilane, dipropoxydimethylsilane, dipropoxydiethylsilane, dipropoxydipropylsilane, dimethylpolysiloxane and the like. Among them, dimethylpolysiloxane is preferably used, and tetramethoxysilane, tetraethoxysilane or tetrapropoxysilane is more preferably used.

When the alkoxysilane compound is used to prepare a catalyst for polymerization of polyolefin, and the prepared catalyst is used to polymerize polyolefin, polyolefin having high bulk density may be polymerized. That is, the alkoxysilane compound serves to increase the binding efficiency of dialkoxy magnesium and magnesium halide when a two-component support is formed. When a catalyst including the alkoxysilane compound is used to polymerize polyolefin, polyolefin having high bulk density may be prepared.

The above-described alkoxysilane compound is included in an amount of preferably from 0.1 to 10 parts by weight and more preferably from 1 to 3 parts by weight, based on 1 part by weight of magnesium halide when the magnesium halide precursor solution is prepared. When the amount of the alkoxysilane compound included is less than 0.1 part by weight, unreacted magnesium halide, which has not formed the two-component (dialkoxy magnesium - magnesium halide) support, may be present in a large amount, thereby affecting the improvement of the bulk density of the polymer (polyolefin). When the amount is more than 10 parts by weight, the activity of a catalyst to be prepared may be decreased.

Meanwhile, after magnesium halide is completely dissolved in the first alcohol and the first hydrocarbon, the alkoxysilane compound is introduced therein.

### 2. Preparation of dialkoxy magnesium support

A dialkoxy magnesium support according to the present disclosure may be obtained in the form of particles by reacting metal magnesium with a second alcohol in the presence of a halogen compound which is a reaction initiator.

Here, the metal magnesium is preferably in the form of particles. The size thereof is not particularly limited, but a powder phase having a size of from 10 to 1,000 µm and specifically from 30 to 500 µm is suitable.

As the halogen compound which is the reaction initiator, a halogen molecule, an alkyl halide compound, an acyl halide compound or a metal halide compound may be used. Non-limiting examples thereof include magnesium chloride, magnesium dichloride, magnesium fluoride, magnesium bromide, magnesium iodide, phenoxy magnesium chloride, isoproxy magnesium chloride or butoxy magnesium chloride. It is suitable that the halogen compound is used in an amount of from 0.01 to 10 parts by weight and specifically from 0.1 to 5 parts by weight, based on 1 part by weight of metal magnesium. When the halogen compound is used in an amount less than the range, the reaction rate is decreased. When the halogen compound is used in an amount more than the range, the particle size of the product (dialkoxy magnesium support) may be too increased or fine particles may be produced in a large amount.

Available second alcohol is not particularly limited, but may be one or two or more selected from the group consisting of aliphatic alcohols represented by the formula R₃OH (in this case, R₃ is an aliphatic hydrocarbon having from 1 to 6 carbon atoms (specifically, an alkyl group)), such as methanol, ethanol, n-propanol, isopropanol, n-butanol, isobutanol, n-pentanol, isopentanol, neopentanol, cyclopentanol, n-hexanol, cyclohexanol and the like; and aromatic alcohols represented by the formula R₄OH (in this case, R₄ is an aromatic hydrocarbon having 6 carbon atoms), such as phenol and the like and used either alone or in combination thereof. In this case, among the aliphatic alcohols, one or two or more selected from methanol, ethanol, propanol or butanol are preferably used either alone or in combination thereof. Among them, ethanol is most preferably used. Here, when two or more second alcohols are selected and mixed, the mixture ratio thereof is not particularly limited.

It is suitable that the second alcohol is used in an amount of from 5 to 50 parts by weight and specifically from 7 to 20 parts by weight, based on 1 part by weight of the metal magnesium. When the second alcohol is used in an amount of less than 5 parts by weight, the viscosity of the slurry (that is, a mixture of the second alcohol in the liquid phase, dialkoxy magnesium in the solid phase and unreacted metal magnesium) is abruptly increased, then it is difficult to uniform stir of the slurry. When the second alcohol is used in an amount of more than 50 parts by weight, the bulk density of the support produced may be abruptly decreased or the surface of the support particles may become rough. Specifically, when the bulk density of the support is decreased, the bulk density of the catalyst is decreased. Accordingly, the bulk density of the polymer (polyolefin) finally prepared may also be decreased. When the surface of the support particles becomes rough, the process stability may be deteriorated during polymerization.

When the dialkoxy magnesium support according to the present disclosure is prepared, the reaction temperature is preferably from 25 to 110°C, and specifically, suitable from 45 to 90°C. When the reaction temperature is less than 25°C, the reaction becomes too slow. When the temperature is more than 110°C, the reaction is so rapid that fine particles may be increased.

### 3. Preparation of catalyst for polymerization of polyolefin by reacting magnesium halide precursor solution with dialkoxy magnesium support

The catalyst for polymerization of polyolefin according to the present disclosure may be prepared by reacting the magnesium halide precursor solution and the alkoxy magnesium support in the form of particles (spherical), as prepared above, with titanium tetrachloride and an internal electron donor in the presence of the second hydrocarbon.

The catalyst for polymerization of polyolefin may also be prepared by firstly reacting the magnesium halide precursor solution and the dialkoxy magnesium support in the form of particles (spherical), as prepared above, with titanium tetrachloride in the presence of the second hydrocarbon to prepare a solid product, and then secondly reacting the solid product with titanium tetrachloride and an internal electron donor again in the presence of the second hydrocarbon.

In this case, the solid product is a two-component support, obtained by subjecting magnesium halide to a recrystallization reaction (precipitation) on the surface of a dialkoxy magnesium support, and a support in which two components of dialkoxy magnesium-magnesium halide are combined.

In this case, the second hydrocarbon is not particularly limited, but one or two or more hydrocarbons selected from the group consisting of aliphatic hydrocarbons having from 6 to 12 carbon atoms and aromatic hydrocarbons having from 6 to 12 carbon atoms may be used either alone or in combination thereof. Specifically, it is preferred that one or two or more are selected from saturated aliphatic hydrocarbons having from 7 to 10 carbon atoms or aromatic hydrocarbons having from 6 to 12 carbon atoms and used either alone or in combination thereof. Here, non-limiting examples of the aliphatic hydrocarbon having from 6 to 12 carbon atoms include hexane, heptane, octane, decane, dodecane, tetradecane, mineral oil or the like, and non-limiting examples of the aromatic hydrocarbon having from 6 to 12 carbon atoms include benzene, toluene, xylene, ethyl benzene, cumene or the like.

An available material as the internal electron donor is not particularly limited, but one or two or more are preferably selected from the group consisting of phthalate-based compounds, carboxylic acid ester compounds and diether compounds.

Non-limiting examples of the phthalate-based compounds include monoethoxyphthalate, dimethyl phthalate, methylethyl phthalate, diethyl phthalate, di-normal propyl phthalate, diisopropyl phthalate, di-normal butyl phthalate, diisobutyl phthalate, di-normal octyl phthalate, dipentyl phthalate or mixtures thereof. Non-limiting examples of the carboxylic acid ester compounds include methyl acetate, ethyl acetate, phenyl acetate, ethyl propanate, ethyl butyrate, diethyl malonate or mixtures thereof. Non-limiting examples of the diether compounds include 1,3-diether type, such as 2,2-dimethyl-1,3-dimethoxypropane, 2,2-diisopropyl-1,3-dimethoxypropane, 2,2-diisobutyl-1,3-dimethoxypropane, 2,2-diisobutyl-1,3-diethoxypropane, 2,2-diisobutyl-1,3-dibutoxypropane or mixtures thereof.

In the present disclosure, it is preferred that the magnesium halide precursor solution and the titanium tetrachloride compound are first introduced into a suspended solution in which the dialkoxy magnesium support is suspended in the second hydrocarbon solvent to cause a first reaction, and at this time, it is suitable that the reaction temperature is from -50 to 50°C and specifically from -30 to 20°C. When the reaction temperature is out of the range, the particle shape of a catalyst which is a final product is destroyed and thus fine particles may be produced in large amounts. When a catalyst having the fine particles of large amounts is used in this manner, process stability may be deteriorated during the commercial production thereof.

Here, it is preferred that the amount of magnesium halide included in the magnesium halide precursor solution is from 0.01 to 10 parts by weight and specifically 0.05 to 0.5 part by weight, based on 1 part by weight of the dialkoxy magnesium support. When the amount of magnesium halide is less than the range, a component of magnesium halide in the two-component support is decreased, and thus the effect of improving the bulk density of the polymer (polyolefin) may be deteriorated. When the amount is more than the range, not only the two-component support but also the magnesium halide single support may be formed.

It is preferred that the amount of titanium tetrachloride used during a first reaction is from 0.1 to 10 parts by weight and specifically from 3 to 8 parts by weight based on 1 part by weight of the dialkoxy magnesium support. Meanwhile, it is preferred that the injection of the magnesium halide precursor solution and titanium tetrachloride is slowly performed over from 30 min to 5 hr, and the reaction of producing the two-component support may be completed by slowly increasing the temperature up to from 60 to 100°C after the injection is completed.

The reaction of producing the support is completed in this manner, and then a mixture in the slurry state, in which the support is included, is washed with the second hydrocarbon once or more, and then titanium tetrachloride is introduced again therein and heated up to from 90 to 130°C to perform a second reaction. In this case, the amount of titanium tetrachloride used is preferably from 0.1 to 10 parts by weight and more preferably from 2 to 7 parts by weight, based on 1 part by weight of the dialkoxy magnesium support initially used.

An internal electron donor is introduced during the process of heating of the second reaction, and the introduction temperature and the number of times of introduction at this time are not particularly limited. The whole amount of the internal electron donor used is preferably from 0.1 to 1 part by weight based on 1 part by weight of the dialkoxy magnesium support used. When the internal electron donor is used such that the amount is out of the range, the polymerization activity of the catalyst or the stereo regularity when polyolefin is prepared by using the catalyst prepared may be deteriorated.

Here, the process of performing the reaction may be further added by washing the mixture in the slurry state, in which the second reaction is also completed, with the second hydrocarbon once or more, then introducing titanium tetrachloride again therein and heating the mixture up to from 90 to 130°C. In this case, the amount of titanium tetrachloride used is preferably from 0.1 to 10 parts by weight and more preferably from 2 to 7 parts by weight, based on 1 part by weight of dialkoxy magnesium initially used. After the reaction, the mixture may be subjected to the washing process and the vacuum drying process by the second hydrocarbon to obtain the catalyst for polymerization of polyolefin, which is a product according to the present disclosure. It is possible to increase the activity of the catalyst by subjecting the mixture to a third reaction with titanium tetrachloride in this manner.

The catalyst for polymerization of polyolefin according to the present disclosure, which is prepared by the method as described above, includes magnesium, titanium, silicon, an internal electron donor and a halogen atom, and the content of each component may be controlled according to the content of the raw material and thus is not particularly limited. However, it is preferred that magnesium, titanium, silicon, the internal electron donor and the halogen atom are included in amounts of from 20 to 40 parts by weight, from 1 to 10 parts by weight, from 0.1 to 5 parts by weight, from 5 to 20 parts by weight and from 40 to 70 parts by weight, respectively.

### <Preparation method of polyolefin>

The present disclosure may prepare polyolefin by using the catalyst for polymerization of polyolefin prepared as described above. That is, the catalyst is prepared by the method as described above, and olefin may be polymerized (reacted) with a co-catalyst in the presence of the catalyst thus prepared to prepare polyolefin. Specifically, an alkyl aluminum compound as the co-catalyst and an external electron donor are placed into a polymerization reactor, the catalyst prepared as described above is added thereto, and hydrogen is supplied. Then, the polyolefin may be formed by introducing an olefin monomer therein to perform a polymerization reaction for a predetermined time. In this case, non-limiting examples of the material which is available as the alkyl aluminum compound include trimethyl aluminum, triethyl aluminum, triisobutyl aluminum, diethylaluminum chloride, ethylaluminum dichloride, ethylaluminum sesquichloride or the like, and non-limiting examples of the material which is available as the external electron donor include a silane compound such as cyclohexylmethyl dimethoxysilane, dicyclopentyl dimethoxysilane, diisopropyl dimethoxysilane, vinyltriethoxysilane and the like, or a mixture of the silane compounds.

Meanwhile, the catalyst of the present disclosure, which is used during the polymerization process of polyolefin, may be used in the gas-phase, bulk phase or slurry phase. When the polymerization is performed in the bulk phase or slurry phase, a separate solvent or olefin itself may be used as a medium, and olefin used in the polymerization may be used either alone or in combination of two or more kinds. Here, available solvent and olefin are not particularly limited, but butane, pentane, hexane, heptane, cyclopentane, cyclohexane and the like may be used as the solvent and ethylene, propylene, 1-butene, 1-pentene, 1-hexene, 1-octene and the like may be used as the olefin. It is suitable that the polymerization temperature of the polyolefin is from 0 to 200°C and preferably from 30 to 150°C, and that the polymerization pressure is from 1 to 100 atm and preferably from 2 to 40 atm.

Hereinafter, the present disclosure will be described in more detail with reference to Synthetic Examples and Polymerization Examples, but the scope of the disclosure is not limited to the following examples.

### [Example 1] Preparation of catalyst for polymerization

### 1. Preparation of magnesium halide precursor solution

A 350 ml-glass reactor equipped with a stirrer, an oil circulation heater and a cooling reflux device was sufficiently ventilated with nitrogen, and then 9.52 g of anhydrous magnesium dichloride, 57.85 mL of 2-ethylhexanol and 50 mL of normal decane were introduced therein and melted while being stirred at 135°C and 300 rpm. When the anhydrous magnesium dichloride is completely melted to obtain a homogeneous solution, the solution was aged for 1 hr and cooled to 60°C, then 13.0 ml of tetraethoxysilane was introduced therein, and reaction was performed for 30 min. After the reaction is completed, the solution was cooled to normal temperature to obtain a magnesium halide precursor solution.

### 2. Preparation of support

A 2 L-glass reactor equipped with a stirrer, an oil circulation heater and a cooling reflux device was sufficiently ventilated with nitrogen, 36.5 g of metal magnesium, 3 ml of phthalic acid dichloride and 370 ml of anhydrous ethanol were introduced therein, and the temperature was increased to 80°C while the mixture were stirred at 400 rpm to allow the components to be reacted with each other. 370 ml of anhydrous ethanol was additionally introduced therein 30 min after the reaction begins, only hydrogen generated was discharged, and ethanol was reacted while being refluxed. 180 ml of ethanol and 3 ml of phthalic acid dichloride were additionally introduced therein 2 hours after the generation of hydrogen is stabilized, and the reaction was performed while the temperature was maintained for a sufficient time. After the reaction, washing was performed eight times with 1 L of normal hexane per time at 50°C. The washed product was vacuum dried to obtain 160 g of a white powdered diethoxy magnesium support which has excellent fluidity. The spherical diethoxy magnesium support obtained has an average particle diameter of 45 µm and a bulk density of 0.33 g/ml.

### 3. Production of catalyst

A 2 L-glass reactor equipped with a stirrer, an oil circulation heater and a cooling reflux device was sufficiently ventilated with nitrogen, then 700 ml of toluene and 50 g of the diethoxy magnesium support prepared above were introduced therein, the reactor was maintained at a low temperature of 0°C or less, and 132 ml of titanium tetrachloride was introduced therein while the mixture was stirred at 500 rpm. When the introduction was completed, 80 ml of the magnesium halide precursor solution prepared above was introduced therein. After the introduction, the reactor was maintained for 1 hr, and the temperature of the reactor was slowly increased up to 90°C, and reaction was performed for 2 hr. After the reaction, the solid product was allowed to be precipitated and was washed with 1,000 ml of fresh toluene five times.

700 ml of toluene was added to the solid product, and 111 ml of titanium tetrachloride was introduced therein at normal temperature. After 30 min, the temperature was increased up to 70°C. After the temperature reached 70°C, 20.1 ml of diisobutyl phthalate was introduced therein, the temperature was increased up to 110°C at the same rate, and then the reaction was performed for 2 hr. After the reaction, the solid product was allowed to be precipitated and washed with 1,000 ml of fresh toluene five times, and then washed five times in the same manner by using 1,000 ml of normal hexane. The washed product was vacuum dried to obtain a catalyst, and at this time, the content of titanium was 3.2%.

### [Example 2]

The final solid product in the process of producing the catalyst in Example 1 was washed with 1,000 ml of toluene four times, then 700 ml of fresh toluene and 111 ml of titanium tetrachloride were introduced therein, and an additional reaction was performed at 110°C for 2 hr. After the reaction, the solid product was allowed to be precipitated and washed with 1,000 ml of toluene five times, and then washed five times in the same manner by using 1,000 ml of normal hexane. The washed product was vacuum dried to obtain a catalyst, and at that time, the content of titanium was 2.8%.

### [Example 3]

A catalyst was obtained in the same manner as in Example 1, except that 6.5 ml of tetraethoxylsilane in the process of preparing the magnesium halide precursor solution in Example 1 was introduced, and at that time, the content of titanium was 3.4%.

### [Example 4]

A catalyst was obtained in the same manner as in Example 1, except that the magnesium halide precursor solution was introduced in an amount of 39.8 ml in the process of producing the catalyst in Example 1, and at that time, the content of titanium was 2.9%.

### [Comparative Example 1]

A catalyst was obtained in the same manner as in Example 1, except that the magnesium halide precursor solution was not used, and at that time, the content of titanium was 2.6%.

### [Comparative Example 2]

A catalyst was obtained in the same manner as in Example 1, except that tetraethoxysilane was not introduced during the preparation of the magnesium halide precursor solution in Example 1, and at that time, the content of titanium was 3.6%.

### [Comparative Example 3]

### 1. Preparation of magnesium halide precursor solution

A 2 L-glass reactor equipped with a stirrer, an oil circulation heater and a cooling reflux device was sufficiently ventilated with nitrogen, and then 47.6 g of anhydrous magnesium chloride, 275 ml of 2-ethylhexanol and 200 mL of normal decane were introduced therein and melted while being stirred at 300 rpm at 135°C. When the anhydrous magnesium chloride is completely dissolved to obtain a homogeneous solution, the solution was aged for 1 hr and cooled to normal temperature to obtain a magnesium halide precursor solution.

### 2. Production of catalyst

A 2 L-glass reactor equipped with a stirrer, an oil circulation heater and a cooling reflux device was sufficiently ventilated with nitrogen, then 800 ml of normal decane was maintained at a low temperature of 0°C or less while being stirred at 500 rpm, and 438 ml of titanium tetrachloride was introduced therein. When the introduction was completed, 485 ml of the magnesium halide precursor solution prepared above was slowly introduced therein. After the introduction, the reactor was maintained for 1 hr, and then the temperature of the reactor was slowly increased up to 110°C, and reaction was performed for 2 hr. After the reaction, the solid product was allowed to be precipitated and was washed with 1,000 ml of fresh toluene five times.

800 ml of normal decane was added to the solid product, and 219 ml of titanium tetrachloride was introduced therein at normal temperature. After 30 min, the temperature was increased up to 70°C. After the temperature reached 70°C, 20 ml of diisobutyl phthalate was introduced therein, the temperature was increased up to 110°C at the same rate, and then the reaction was performed for 2 hr. After the reaction, the solid product was allowed to be precipitated and washed with 1,000 ml of fresh toluene five times, and then washed five times in the same manner by using 1,000 ml of normal hexane. The washed product was vacuum dried to obtain a catalyst, and at that time, the content of titanium was 2.7%.

### [Polymerization Example] Polymerization of polypropylene

A 2 L-high pressure stainless steel reactor was sufficiently ventilated with nitrogen, 2 mmol of triethyl aluminum and 0.15 mmol of cyclohexyl methyl dimethoxy silane were introduced therein, and each of 5 mg of the catalysts prepared in Examples 1 to 4 and Comparative Examples 1 to 3 was introduced. Subsequently, 1,000 ml of hydrogen and 500 g of the liquid phase propylene were introduced, a prepolymerization was performed at 25°C for 5 min, and then polymerization was performed for 1 hr while the system was stirred at 70°C and 250 rpm.

The polypropylene obtained was analyzed, and the result is shown in Table 1. At that time, catalyst activity, stereo regularity, bulk density and the like were measured in the following manner.
1) Catalyst activity (kg-PP/g-cat): amount of polypropylene produced (kg) / amount of catalyst (g)
2) Stereo regularity (XIS): Wt% of insoluble components which are crystallized in mixed xylene and precipitated
3) Bulk density (BD): value measured by ASTM D1895

**[Table 1]**

| | **Example 1** | **Example 2** | **Example 3** | **Example 4** | **Comparative Example 1** | **Comparative Example 2** | **Comparative Example 3** |
|---|---|---|---|---|---|---|---|
| Polymerization activity (kg-PP/g-cat, hr) | 39.1 | 42.8 | 40.1 | 40.8 | 32.2 | 34.9 | 23.8 |
| Bulk density (g/mL) | 0.50 | 0.50 | 0.47 | 0.48 | 0.40 | 0.42 | 0.36 |
| Stereo regularity (XIS) | 98.2 | 98.3 | 97.9 | 98.0 | 97.7 | 97.5 | 96.2 |

Referring to Table 1, it could be confirmed that polypropylenes polymerized in Examples 1 to 4 according to the present disclosure that have a high bulk density of 0.45 g/mL or more may be prepared, compared to polypropylenes polymerized in Comparative Examples 1 to 3.

According to the present disclosure, a catalyst for polymerization of a two-component magnesium compound supported polyolefin, which has high activity, may be provided by including a preparation process of reacting a magnesium halide precursor solution and a dialkoxy magnesium support with titanium tetrachloride and an internal electron donor in the presence of a second hydrocarbon.

The present disclosure may provide polyolefin having high bulk density by using the above-described catalyst for polymerization of polyolefin to prepare the polyolefin.

## Claims

1. A method for preparing a catalyst for polymerization of polyolefin, comprising:
a) dissolving magnesium halide in a first alcohol and a first hydrocarbon and then adding an alkoxysilane compound thereto to prepare a magnesium halide precursor solution;
b) reacting a second alcohol with metal magnesium in the presence of a halogen compound to prepare a dialkoxy magnesium support; and
c) reacting the magnesium halide precursor solution and the dialkoxy magnesium support with titanium tetrachloride and an internal electron donor in the presence of a second hydrocarbon.

2. The method of claim 1, wherein the alkoxysilane compound used in step a) is a compound represented by the following Formula 1:
[Formula 1] Si(ORₐ)ₙR_{b(4-n)}
wherein, Rₐ and R_{b} are an alkyl group having from 1 to 5 carbon atoms, and n is a natural number of from 1 to 4.

3. The method of claim 1, wherein a content of the alkoxysilane compound in the magnesium halide precursor solution in step a) is from 0.1 to 10 parts by weight based on 1 part by weight of the magnesium halide.

4. The method of claim 1, wherein a content of the magnesium halide in the magnesium halide precursor solution in step c) is from 0.01 to 5 parts by weight based on 1 part by weight of the dialkoxy magnesium support.

5. The method of claim 1, wherein in step a), a content of the first alcohol in the magnesium halide precursor solution is from 1 to 10 parts by weight based on 1 part by weight of the magnesium halide, and a content of the first hydrocarbon is from 1 to 20 parts by weight based on 1 part by weight of the magnesium halide.

6. The method of claim 1, wherein the first alcohol used in step a) is selected from the group consisting of aliphatic alcohols represented by Formula R₁OH and aromatic alcohols represented by R₂OH in which R₁ is an aliphatic hydrocarbon having from 1 to 12 carbon atoms and R₂ is an aromatic hydrocarbon having from 6 to 12 carbon atoms.

7. The method of claim 1, wherein the first hydrocarbon used in step a) is an aliphatic hydrocarbon having from 6 to 20 carbon atoms.

8. The method of claim 1, wherein in step b), the halogen compound and the second alcohol are used in amounts of from 0.01 to 10 parts by weight and from 5 to 50 parts by weight, respectively, based on 1 part by weight of the metal magnesium.

9. The method of claim 1, wherein the second alcohol used in step b) is selected from the group consisting of aliphatic alcohols represented by Formula R₃OH and aromatic alcohols represented by R₄OH in which R₃ is an aliphatic hydrocarbon having from 1 to 6 carbon atoms and R₄ is an aromatic hydrocarbon having 6 carbon atoms.

10. The method of claim 1, wherein the second alcohol used in step c) is selected from the group consisting of aliphatic hydrocarbons having from 6 to 12 carbon atoms and aromatic hydrocarbons having from 6 to 12 carbon atoms.

11. A catalyst for polymerization of polyolefin prepared by the preparation method of any one of claims 1 to 10.

12. A method for preparing polyolefin using the catalyst for polymerization of polyolefin of claim 11.

## Patentansprüche

1. Verfahren zur Herstellung eines Katalysators zur Polymerisation von Polyolefin, umfassend:
a) Auflösen von Magnesiumhalogenid in einem ersten Alkohol und einem ersten Kohlenwasserstoff und dann Hinzugeben einer Alkoxysilan-Verbindung zum Herstellen einer Magnesiumhalogenid-Vorläuferlösung;
b) Umsetzen eines zweiten Alkohols mit Magnesiummetall in Gegenwart einer Halogenverbindung zum Herstellen eines Dialkoxymagnesium-Trägers; und
c) Umsetzen der Magnesiumhalogenid-Vorläuferlösung und des Dialkoxymagnesium-Trägers mit Titantetrachlorid und einem internen Elektronendonor in Gegenwart eines zweiten Kohlenwasserstoffs.

2. Verfahren nach Anspruch 1, wobei die im Schritt a) verwendete Alkoxysilan-Verbindung eine durch die folgende Formel 1 vertretene Verbindung ist:
[Formel 1] Si(ORₐ)ₙR_{b(4-n)}
worin Rₐ und R_{b} eine Alkylgruppe mit 1 bis 5 Kohlenstoffatomen sind, und n eine natürliche Zahl von 1 bis 4 ist.

3. Verfahren nach Anspruch 1, wobei im Schritt a) in der Magnesiumhalogenid-Vorläuferlösung ein Gehalt der Alkoxysilan-Verbindung von 0,1 bis 10 Gewichtsteile bezogen auf 1 Gewichtsteil des Magnesiumhalogenids vorliegt.

4. Verfahren nach Anspruch 1, wobei im Schritt c) in der Magnesiumhalogenid-Vorläuferlösung ein Gehalt des Magnesiumhalogenids von 0,01 bis 5 Gewichtsteile bezogen auf 1 Gewichtsteil des Dialkoxymagnesium-Trägers vorliegt.

5. Verfahren nach Anspruch 1, wobei im Schritt a) in der Magnesiumhalogenid-Vorläuferlösung ein Gehalt des ersten Alkohols von 1 bis 10 Gewichtsteile bezogen auf 1 Gewichtsteil des Magnesiumhalogenids und ein Gehalt des ersten Kohlenwasserstoffs von 1 bis 20 Gewichtsteile bezogen auf 1 Gewichtsteil des Magnesiumhalogenids vorliegt.

6. Verfahren nach Anspruch 1, wobei der erste, im Schritt a) verwendete Alkohol ausgewählt ist aus der Gruppe bestehend aus aliphatischen Alkoholen vertreten durch die Formel R₁OH und aromatischen Alkoholen vertreten durch R₂OH, in welchen R₁ ein aliphatischer Kohlenwasserstoff mit 1 bis 12 Kohlenstoffatomen ist und R₂ ein aromatischer Kohlenwasserstoff mit 6 bis 12 Kohlenstoffatomen ist.

7. Verfahren nach Anspruch 1, wobei der erste, im Schritt a) verwendete Kohlenwasserstoff ein aliphatischer Kohlenwasserstoff mit 6 bis 20 Kohlenstoffatomen ist.

8. Verfahren nach Anspruch 1, wobei im Schritt b) die Halogenverbindung und der zweite Alkohol in Mengen von 0,01 bis 10 Gewichtsteile und entsprechend von 5 bis 50 Gewichtsteile verwendet werden, bezogen auf 1 Gewichtsteil des Magnesiummetalls.

9. Verfahren nach Anspruch 1, wobei der zweite, im Schritt b) verwendete Alkohol ausgewählt ist aus der Gruppe bestehend aus aliphatischen Alkoholen vertreten durch die Formel R₃OH und aromatischen Alkoholen vertreten durch R₄OH, in welchen R₃ ein aliphatischer Kohlenwasserstoff mit 1 bis 6 Kohlenstoffatomen ist und R₄ ein aromatischer Kohlenwasserstoff mit 6 Kohlenstoffatomen ist.

10. Verfahren nach Anspruch 1, wobei der zweite, im Schritt c) verwendete Kohlenwasserstoff ausgewählt ist aus der Gruppe bestehend aus aliphatischen Kohlenwasserstoffen mit 6 bis 12 Kohlenstoffatomen und aromatischen Kohlenwasserstoffen mit 6 bis 12 Kohlenstoffatomen.

11. Katalysator zur Polymerisation von Polyolefin, hergestellt nach dem Herstellverfahren gemäß einem der Ansprüche 1 bis 10.

12. Verfahren zur Herstellung von Polyolefin unter Verwendung eines Katalysators zur Polymerisation von Polyolefin nach Anspruch 11.

## Revendications

1. Procédé de préparation d'un catalyseur de polymérisation de polyoléfine, comprenant :
a) la dissolution d'un halogénure de magnésium dans un premier alcool et un premier hydrocarbure, puis l'ajout d'un composé d'alcoxysilane pour préparer une solution de précurseur d'halogénure de magnésium ;
b) la réaction d'un second alcool avec du magnésium métallique en présence d'un composé halogéné pour préparer un support de dialcoxy-magnésium ; et
c) la réaction de la solution de précurseur d'halogénure de magnésium et du support de dialcoxymagnésium avec du tétrachlorure de titane et un donneur d'électron interne en présence d'un second hydrocarbure.

2. Procédé selon la revendication 1, dans lequel le composé d'alcoxysilane utilisé dans l'étape a) est un composé représenté par la formule 1 suivante :
[Formule 1] Si (ORₐ)ₙR_{b(4-n)}
dans laquelle Rₐ et R_{b} sont un groupe alkyle contenant 1 à 5 atomes de carbone et n est un nombre entier allant de 1 à 4.

3. Procédé selon la revendication 1, dans lequel la teneur en composé d'alcoxysilane dans la solution de précurseur d'halogénure de magnésium dans l'étape a) est de 0,1 à 10 équivalents en poids sur la base de 1 équivalent en poids de l'halogénure de magnésium.

4. Procédé selon la revendication 1, dans lequel la teneur en halogénure de magnésium dans la solution de précurseur d'halogénure de magnésium dans l'étape c) est de 0,01 à 5 équivalents en poids sur la base de 1 équivalent en poids du support de dialcoxy-magnésium.

5. Procédé selon la revendication 1, dans lequel, dans l'étape a), la teneur en premier alcool dans la solution de précurseur d'halogénure de magnésium est de 1 à 10 équivalents en poids sur la base de 1 équivalent en poids de l'halogénure de magnésium, et la teneur en premier hydrocarbure est de 1 à 20 équivalents en poids sur la base de 1 équivalent en poids de l'halogénure de magnésium.

6. Procédé selon la revendication 1, dans lequel le premier alcool utilisé dans l'étape a) est choisi dans le groupe constitué par les alcools aliphatiques représentés par la formule R₁OH et les alcools aromatiques représentés par R₂OH, dans lesquels R₁ est un hydrocarbure aliphatique contenant 1 à 12 atomes de carbone et R₂ est un hydrocarbure aromatique contenant 6 à 12 atomes de carbone.

7. Procédé selon la revendication 1, dans lequel le premier hydrocarbure utilisé dans l'étape a) est un hydrocarbure aliphatique contenant 6 à 20 atomes de carbone.

8. Procédé selon la revendication 1, dans lequel, dans l'étape b), le composé halogéné et le second alcool sont utilisés en des quantités de 0,01 à 10 équivalents en poids et de 5 à 50 équivalents en poids, respectivement, sur la base de 1 équivalent en poids du magnésium métallique.

9. Procédé selon la revendication 1, dans lequel le second alcool utilisé dans l'étape b) est choisi dans le groupe constitué par les alcools aliphatiques représentés par la formule R₃OH et les alcools aromatiques représentés par R₄OH, dans lesquels R₃ est un hydrocarbure aliphatique contenant 1 à 6 atomes de carbone et R₄ est un hydrocarbure aromatique contenant 6 atomes de carbone.

10. Procédé selon la revendication 1, dans lequel le second alcool utilisé dans l'étape c) est choisi dans le groupe constitué par les hydrocarbures aliphatiques contenant 6 à 12 atomes de carbone et les hydrocarbures aromatiques contenant 6 à 12 atomes de carbone.

11. Catalyseur de polymérisation de polyoléfine, préparé par le procédé de préparation selon l'une quelconque des revendications 1 à 10.

12. Procédé de préparation d'une polyoléfine au moyen du catalyseur de polymérisation de polyoléfine selon la revendication 11.
